# EUROPÄISCHE PATENTSCHRIFT

(11) **EP 2 560 277 B1**
(45) Veröffentlichungstag und Bekanntmachung des Hinweises auf die Patenterteilung: **17.05.2017**
(21) Anmeldenummer: 11178107.6
(22) Anmeldetag: 19.08.2011
(51) Int. Cl.: B60L 11/18, H02P 29/024, H02H 7/09

(54) **Schutz eines Drehstrommotors im Feldschwächbereich**
Protection of an alternating current engine in the field weakening range
Protection d'un moteur triphasé dans la zone d'affaiblissement de champ

(43) Veröffentlichungstag der Anmeldung: 20.02.2013
(73) Patentinhaber: Siemens Aktiengesellschaft, 80333 München (DE)
(72) Erfinder: Köpken, Hans-Georg, 91056 Erlangen (DE)
(74) Vertreter: Dr. Gassner & Partner mbB

(56) Entgegenhaltungen:
- EP-A2- 2 031 749
- EP-A2- 2 048 774
- JP-A- 2007 099 066

## Beschreibung

Schutz eines Drehstrommotors im Feldschwächbereich Die vorliegende Erfindung betrifft eine Antriebsvorrichtung für ein Kraftfahrzeug mit einer Gleichspannungsquelle, die eine Minusklemme und eine Plusklemme aufweist, einem Drehstrommotor, dessen Wicklungen in einem Sternpunkt zusammengeführt sind, und einem Umrichter, der an die Gleichspannungsquelle und den Drehstrommotor angeschlossen ist, zum Umrichten eines Gleichstroms in einen Drehstrom. Darüber hinaus betrifft die vorliegende Erfindung ein Verfahren zum Betreiben einer derartigen Antriebsvorrichtung.

Bei Elektrofahrzeugen wird bevorzugt eine permanenterregte Synchronmaschine eingesetzt. Dadurch ist eine hohe Leistungsdichte und ein hoher Wirkungsgrad geboten. Die elektrische Maschine ist typischerweise als Drei-Phasen- bzw. Drehstrommotor ausgebildet. Der Drehstrommotor wird in einem Fahrzeug meist von einer Hochvoltbatterie (mehr als 100 V; typischerweise 400 V) gespeist. Der Gleichstrom der Batterie wird über einen Umrichter in Drehstrom gewandelt. Der Umrichter besitzt einen Leistungsteil mit entsprechenden Leistungshalbleitern, die von einem Steuerungsteil gesteuert bzw. geregelt werden. Problematisch ist das Verhalten einer solchen Antriebsvorrichtung mit Drehstrommotor, Umrichter und Gleichspannungsquelle bei einem Ausfall des Leistungsteils des Umrichters im Feldschwächbereich. Wenn beispielsweise wegen einer unterbrochenen Treiberversorgung die Leistungstransistoren des Umrichters abgeschaltet sind, speist die Maschine über Dioden, die parallel zu den Leistungstransistoren liegen, Leistung in die Gleichspannungsquelle bzw. Batterie zurück. Dies kann zu einem gefährlichen Bremsmoment führen. Falls das Batterieschütz (oder die Batteriesicherung), das üblicherweise zwischen der Batterie und dem Umrichter eingesetzt ist, öffnet, besteht zusätzlich die Gefahr einer Überspannung an den Motorklemmen, was unter Umständen zu einer Beschädigung oder Zerstörung des Leistungsteils oder anderer Komponenten des Hochvoltkreises bzw. Zwischenkreises führt.

In diesem Zusammenhang offenbart die EP 2 048 774 A2 ein rotierendes elektrisches System mit sternverbundenen Mehrphasenstatorwicklungen. Darüber hinaus offenbart die JP 2007-99066 A ein elektrisches Steuergerät für eine Lenkung eines Fahrzeugs.

Damit derartige Probleme eines unerwünschten Bremsmoments und/oder einer unerwünschten Überspannung nicht auftreten, kann die gesamte Antriebsvorrichtung mit einem sehr geringen Feldschwächbereich ausgelegt werden. Dies führt jedoch zu einem unwirtschaftlichen Leistungsteil.

Eine weitere Möglichkeit, den genannten Problemen hinsichtlich des unerwünschten Drehmoments bzw. der unerwünschten Überspannung zu begegnen ist der Einsatz eines so genannten "Voltage Protection Module". Für ein derartiges Modul werden neben einem Thyristor sechs zusätzliche Dioden benötigt. Dies stellt einen unerwünschten Zusatzaufwand dar.

Die Aufgabe der vorliegenden Erfindung besteht somit darin, eine Antriebsvorrichtung vorzuschlagen, bei der die Probleme hinsichtlich des Bremsmoments und der Überspannung weniger stark zu Tage treten. Darüber hinaus soll auch ein entsprechendes Verfahren zum Betreiben einer Antriebsvorrichtung bereitgestellt werden.

Erfindungsgemäß wird diese Aufgabe gelöst durch eine Antriebsvorrichtung nach Anspruch 1 sowie ein Verfahren gemäß dem weiteren unabhängigen Anspruch 7. Weitere vorteilhafte Ausgestaltungen ergeben sich durch die Merkmale der abhängigen Ansprüche.

Insbesondere wird eine Antriebsvorrichtung für ein Kraftfahrzeug vorgeschlagen, mit
- einer Gleichspannungsquelle, die eine Minusklemme und eine Plusklemme aufweist,
- einem Drehstrommotor, dessen Wicklungen in einem Sternpunkt zusammengeführt sind, und
- einem Umrichter, der an die Gleichspannungsquelle und den Drehstrommotor angeschlossen ist, zum Umrichten eines Gleichstroms in einen Drehstrom, wobei
- der Sternpunkt des Drehstrommotors mit einem Schaltelement an die Minusklemme oder Plusklemme der Gleichspannungsquelle angeschlossen ist, so dass der Sternpunkt in einem vorgegebenen Störfall der Antriebsvorrichtung auf das Potential einer der Klemmen legbar ist.

Gemäß der Ausführung der Erfindung weist die Antriebsvorrichtung eine Überwachungseinrichtung zum automatischen Feststellen des vorgegebenen Störfalls auf, wobei die Überwachungseinrichtung das Schaltelement steuert. Prinzipiell kann die Ansteuerung des Schaltelements natürlich auch manuell erfolgen. Aus Sicherheitsgründen ist jedoch ein rasches Schalten im Störfall und damit ein automatisches Feststellen des Störfalls anzustreben.

Mit der Überwachungseinrichtung ist ein Drehmoment des Drehstrommotors überwachbar, wobei der vorgegebene Störfall bei einer vorbestimmten Abweichung des Drehmoments von einem Solldrehmoment gegeben ist. Auf diese Weise kann rasch ein gefährliches Bremsmoment erkannt und der Sternpunkt dann beispielsweise rasch auf das negative Zwischenkreispotential geschaltet werden.

Darüber hinaus wird insbesondere erfindungsgemäß bereitgestellt ein Verfahren zum Betreiben einer Antriebsvorrichtung für ein Kraftfahrzeug, die eine Gleichspannungsquelle, welche eine Minusklemme und eine Plusklemme aufweist, einen Drehstrommotor, dessen Wicklungen in einem Sternpunkt zusammengeführt sind, und einen Umrichter, der an die Gleichspannungsquelle und den Drehstrommotor angeschlossen ist, zum Umrichten eines Gleichstroms in einen Drehstrom umfasst, wobei der Sternpunkt des Drehstrommotors mit der Minusklemme oder Plusklemme der Gleichspannungsquelle kurzgeschlossen wird, wenn ein vorgegebener Störfall der Antriebsvorrichtung vorliegt, wobei mittels einer Überwachungseinrichtung der vorgegebene Störfall automatisch festgestellt wird, wobei die Überwachungseinrichtung das Schaltelement steuert, wobei mit der Überwachungseinrichtung ein Drehmoment des Drehstrommotors überwacht wird, wobei der vorgegebene Störfall bei einer vorbestimmten Abweichung des Drehmoments von einem Solldrehmoment gegeben ist.

In vorteilhafter Weise wird also erfindungsgemäß der Sternpunkt des Drehstrommotors an eine Klemme der Gleichspannungsquelle gelegt, wenn ein Störfall auftritt. Dies hat zur Folge, dass nur dann Energie über den Umrichter in die Gleichspannungsquelle eingespeist wird, wenn die Klemmenspannung (Spannung zwischen einer Klemme des Motors und beispielsweise dem Minuspol der Gleichspannungsquelle bzw. dem negativen Zwischenkreispotential) größer als die Zwischenkreisspannung bzw. Batteriespannung ist. Ist der Sternpunkt des Motors dagegen frei, so genügt es für ein Rückspeisen in die Gleichspannungsquelle, wenn eine verkettete Spannung (Spannung zwischen zwei Klemmen des Motors) größer als die Zwischenkreisspannung ist. Da die verkettete Spannung in einem symmetrischen System um den Faktor √3 größer als die Klemmenspannung ist, kann durch das Schalten des Sternpunkts an eine Klemme der Gleichspannungsquelle eine um etwa den Faktor 1,7 höhere Spannung bzw. Drehzahl des Motors in Kauf genommen werden, bevor eine Zerstörung des Leistungsteils bzw. ein unerwünschtes Bremsmoment einsetzt.

Vorzugsweise handelt es sich bei dem Schaltelement um einen Thyristor. Dies hat den Vorteil, dass ein Thyristor ohne weiteres für die beim Antrieb von Elektrofahrzeugen auftretenden Leistungen ausgelegt sein kann. Außerdem besitzt er verhältnismäßig kurze Schaltzeiten, was beim Auftreten von Überspannungen von großer Bedeutung ist.

Das Schaltelement kann aber auch ein Transistor oder Schütz sein. Wesentlich ist lediglich, dass der Sternpunkt auf das Potential einer Klemme der Gleichspannungsquelle gelegt wird, sobald eine Störung auftritt.

Alternativ oder zusätzlich kann mit der Überwachungseinrichtung eine Spannung an einer oder mehreren Klemmen des Drehstrommotors oder des Zwischenkreises (U_{ZK}) überwachbar sein, wobei der vorgegebene Störfall bei einer vorbestimmten Abweichung der Spannung von einer Sollspannung gegeben ist. Damit ist es auch möglich, einen Störfall anhand einer Überspannung an den Motorklemmen zu erkennen und ein Einspeisen von Energie in die Gleichspannungsquelle bzw. in den Zwischenkreis rechtzeitig durch Kurzschließen des Sternpunkts mit einer Klemme der Gleichspannungsquelle zu unterbinden.

Die Gleichspannungsquelle kann eine Hochvoltbatterie umfassen. Derartige Batterien werden vorzugsweise beim Antrieb von Fahrzeugen eingesetzt.

Wie oben bereits angedeutet wurde, besteht eine bevorzugte Anwendung der erfindungsgemäßen Antriebsvorrichtung in einem Kraftfahrzeug. So ist es günstig, die erfindungsgemäße Technik für Elektrofahrzeuge und Hybridfahrzeuge einzusetzen.

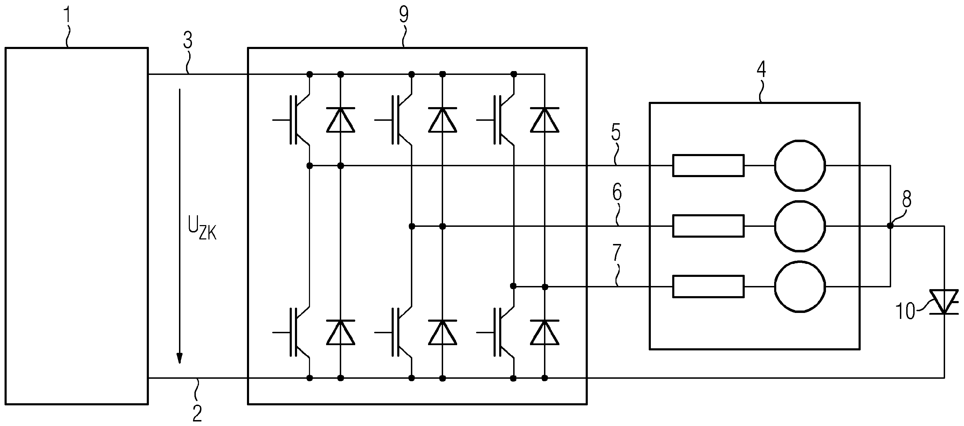

Die vorliegende Erfindung wird nun anhand der beigefügten Zeichnung näher erläutert, die einen Prinzipschaltplan einer erfindungsgemäßen Antriebsvorrichtung für ein Kraftfahrzeug wiedergibt.

Die nachfolgend näher geschilderten Ausführungsbeispiele stellen bevorzugte Ausführungsformen der vorliegenden Erfindung dar.

In dem Beispiel der Figur ist eine Hochvoltbatterie 1 dargestellt, die als Gleichspannungsquelle dient. Eine derartige Hochvoltbatterie besitzt üblicherweise eine Spannung über 100 V, z.B. 400 V. Die Hochvoltbatterie 1 besitzt eine Minusklemme 2 und eine Plusklemme 3. Zwischen diesen beiden Klemmen fällt die Batteriespannung, die hier auch als Zwischenkreisspannung U_{ZK} bezeichnet werden kann, ab. Die positive Batteriespannung entspricht also hier dem positiven Zwischenkreispotential und die negative Batteriespannung dem negativen Zwischenkreispotential.

Die Hochvoltbatterie 1 wird als Energiequelle für einen Drehstrommotor 4 eingesetzt, der beispielsweise zum Antrieb eines Kraftfahrzeugs (z.B. E-Car oder Hybridfahrzeug) dient. Der Drehstrommotor 4 besitzt drei Wicklungen, die einerseits über drei Klemmen 5, 6, 7 versorgbar sind und die andererseits zu einem Sternpunkt 8 zusammengeführt sind.

In bekannter Weise wird der von der Hochvolt-Batterie 1 gelieferte Gleichstrom durch einen Umrichter 9 in einen Drei-Phasen-Strom bzw. Drehstrom für den Drehstrommotor 4 gewandelt. Aus der Figur ist lediglich der Leistungsteil des Umrichters 9 zu entnehmen. Der Leistungsteil besteht aus sechs IGBT-Dioden-Paaren, über die jede Eingangsklemme des Umrichters 9 mit jeder Ausgangsklemme verbunden ist.

Das Steuerungsteil des Umrichters 9 ist in der Figur nicht dargestellt. Es dient dazu, die Halbleiterschalter bzw. IGBTs in geeigneter Weise anzusteuern. In einem Störfall kann beispielsweise die Versorgung des Steuerungsteils unterbrochen sein. In diesem Fall sind die Transistoren abgeschaltet. Bei genügend hoher Drehzahl speist die Maschine dann über die Dioden Energie in die Batterie 1 zurück. Dies ist dann der Fall, wenn der Scheitelwert der im Motor 4 induzierten Spannung zwischen zwei der Klemmen 5, 6, 7 (also eine verkettete Spannung) größer als die Zwischenkreisspannung U_{zK} ist. Erfindungsgemäß soll nun die entsprechende Drehzahlgrenze, ab der eine Einspeisung in die Batterie erfolgt, mit einfachen Mitteln angehoben werden. Dies lässt sich durch ein Schaltelement realisieren, das den Sternpunkt 8 des Drehstrommotors 4 mit der Minusklemme 2 oder der Plusklemme 3 der Batterie, d.h. mit dem negativen Zwischenkreispotential oder dem positiven Zwischenkreispotential verbindet.

In dem Beispiel der Figur ist als Schaltelement ein Thyristor 10 gewählt. Ein Thyristor eignet sich wegen seiner raschen Steuerbarkeit und wegen seiner Eignung zum Schalten hoher Ströme. Alternativ kann als Schaltelement aber auch ein Transistor oder ein Schütz verwendet werden.

Ist das Schaltelement bzw. der Thyristor 10 durchgeschaltet, so liegt der Sternpunkt 8 hier auf dem negativen Zwischenkreispotential. Dieses Potential stellt damit das Bezugspotential für das Rückspeisen in die Batterie 1 dar. Ein Rückspeisen in die Batterie 1 beginnt nämlich erst, wenn der Scheitelwert der in der Maschine induzierten Spannung (EMK) von einer Klemme 5, 6, 7 zu dem Sternpunkt 8 der Zwischenkreisspannung U_{zK} entspricht. Da die Klemmenspannung bei einem symmetrischen System um den Faktor √3 kleiner ist als die verkettete Spannung tritt das Rückspeisen erst bei deutlich höheren Drehzahlen auf gegenüber dem Fall, dass der Sternpunkt 8 frei ist. Im konkreten Fall kann in der Maschine eine ca. 1,7-fach höhere Spannung induziert und somit auch eine um ca. 1,7-fach höhere Drehzahl gefahren werden, bis die Rückspeisschwelle erreicht wird.

Die Überwachung eines Störfalls erfolgt durch eine Überwachungseinrichtung, die vorzugsweise in das Steuerteil des Umrichters 9 integriert ist. Sie überwacht beispielsweise das Drehmoment der Maschine bzw. des Drehstrommotors 4. Übersteigt das Drehmoment des Motors beispielsweise ein vorgegebenes Bremsmoment, was auf einen Ausfall des Leistungsteils im Feldschwächbereich hinweist, so wird der Thyristor 10 gezündet, wodurch die Rückspeisung in die Batterie verhindert wird.

Die Überwachungseinrichtung kann alternativ oder zusätzlich auch dazu ausgebildet sein, dass sie eine Klemmenspannung oder eine verkettete Spannung an dem Motor 4 oder die Zwischenkreisspannung überwacht. Übersteigt diese Spannung eine vorgegebene Spannung bzw. weicht die Spannung um einen vorbestimmten Betrag von einer Sollspannung ab, so wird das Schaltelement kurzgeschlossen bzw. der Thyristor 10 gezündet, so dass wiederum das Rückspeisen bis zu einem gewissen Maß verhindert wird.

Der Schaltungsaufwand für die erfindungsgemäße Lösung ist geringer als die etablierte Lösung eines "Voltage Protection Module" das sechs zusätzliche Dioden benötigt. Die Drehzahlgrenze kann also durch diese aufwandsarme Lösung gegenüber einer Lösung ohne Schutzmaßnahmen um den Faktor 1,73 (√3) angehoben werden.

## Patentansprüche

1. Antriebsvorrichtung für ein Kraftfahrzeug mit
- einer Gleichspannungsquelle (1), die eine Minusklemme (2) und eine Plusklemme (3) aufweist,
- einem Drehstrommotor (4), dessen Wicklungen in einem Sternpunkt (8) zusammengeführt sind, und
- einem Umrichter (9), der an die Gleichspannungsquelle und den Drehstrommotor angeschlossen ist, zum Umrichten eines Gleichstroms in einen Drehstrom,
- wobei der Sternpunkt (8) des Drehstrommotors (4) mit einem Schaltelement (10) an die Minusklemme (2) oder Plusklemme (3) der Gleichspannungsquelle (1) angeschlossen ist, so dass der Sternpunkt in einem vorgegebenen Störfall der Antriebsvorrichtung auf das Potential einer der Klemmen legbar ist,
- einer Überwachungseinrichtung zum automatischen Feststellen des vorgegebenen Störfalls, wobei die Überwachungseinrichtung das Schaltelement (10) steuert,
**dadurch gekennzeichnet, dass**
der vorgegebene Störfall ein Ausfall eines Leitungsteils des Umrichters (9) im Feldschwächbereich ist, bei dem Leistungstransistoren des Umrichters (9) abgeschaltet sind, und mit der Überwachungseinrichtung ein Drehmoment des Drehstrommotors (4) überwachbar ist, und wobei der vorgegebene Störfall bei einer vorbestimmten Abweichung des Drehmoments von einem Solldrehmoment gegeben ist, und zwar wenn das Drehmoment des Drehstrommotors (4) ein vorgegebenes Bremsmoment übersteigt.

2. Antriebsvorrichtung nach Anspruch 1, wobei das Schaltelement (10) ein Thyristor ist.

3. Antriebsvorrichtung nach Anspruch 1, wobei das Schaltelement (10) ein Transistor oder Schütz ist.

4. Antriebsvorrichtung nach Anspruch 1, wobei mit der Überwachungseinrichtung eine Spannung an einer oder mehreren Klemmen des Drehstrommotors (4) überwachbar ist, und wobei der vorgegebene Störfall bei einer vorbestimmten Abweichung der Spannung von einer Sollspannung gegeben ist.

5. Antriebsvorrichtung nach einem der vorhergehenden Ansprüche, wobei die Gleichspannungsquelle (1) eine Hochvoltbatterie umfasst.

6. Kraftfahrzeug mit einer Antriebsvorrichtung nach einem der vorhergehenden Ansprüche.

7. Verfahren zum Betreiben einer Antriebsvorrichtung für ein Kraftfahrzeug, die eine Gleichspannungsquelle (1), welche eine Minusklemme (2) und eine Plusklemme (3) aufweist, einen Drehstrommotor (4), dessen Wicklungen in einem Sternpunkt (8) zusammengeführt sind, und einen Umrichter (9), der an die Gleichspannungsquelle (1) und den Drehstrommotor (4) angeschlossen ist, zum Umrichten eines Gleichstroms in einen Drehstrom umfasst, wobei der Sternpunkt (8) des Drehstrommotors (4) mit der Minusklemme (2) oder Plusklemme (3) der Gleichspannungsquelle (1) kurzgeschlossen wird, wenn ein vorgegebener Störfall der Antriebsvorrichtung vorliegt, wobei mittels einer Überwachungseinrichtung der vorgegebene Störfall automatisch festgestellt wird, wobei die Überwachungseinrichtung das Schaltelement (10) steuert,
**dadurch gekennzeichnet, dass**
der vorgegebene Störfall ein Ausfall eines Leitungsteils des Umrichters (9) im Feldschwächbereich ist, bei dem Leistungstransistoren des Umrichters (9) abgeschaltet sind, und mit der Überwachungseinrichtung ein Drehmoment des Drehstrommotors (4) überwacht wird, wobei der vorgegebene Störfall bei einer vorbestimmten Abweichung des Drehmoments von einem Solldrehmoment gegeben ist, und zwar wenn das Drehmoment des Drehstrommotors (4) ein vorgegebenes Bremsmoment übersteigt.

## Claims

1. Drive apparatus for a motor vehicle having
- a DC voltage source (1), which has a negative terminal (2) and a positive terminal (3),
- a three-phase motor (4), the windings of which are combined in a neutral point (8), and
- an inverter (9), which is connected to the DC voltage source and the three-phase motor, in order to convert a direct current into a three-phase current,
- wherein the neutral point (8) of the three-phase motor (4) is connected by a switch element (10) to the negative terminal (2) or positive terminal (3) of the DC voltage source (1), so that the neutral point can be set to the potential of one of the terminals in the event of a predefined fault in the drive apparatus,
- a monitoring facility for the automatic detection of the predefined fault, wherein the monitoring facility controls the switch element (10),
**characterised in that**
the predefined fault is a failure of a circuit part of the inverter (9) in the field weakening range, in which power transistors of the inverter (9) are switched off, and a torque of the three-phase motor (4) can be monitored using the monitoring facility, and wherein the predefined fault is given at a predetermined deviation of the torque from a setpoint torque, namely when the torque of the three-phase motor (4) exceeds a predefined braking torque.

2. Drive apparatus according to claim 1, wherein the switch element (10) is a thyristor.

3. Drive apparatus according to claim 1, wherein the switch element (10) is a thyristor or contactor.

4. Drive apparatus according to claim 1, wherein a voltage at one or more terminals of the three-phase motor (4) can be monitored using the monitoring facility, and wherein the predefined fault is given at a predetermined deviation of the voltage from a setpoint voltage.

5. Drive apparatus according to one of the preceding claims, wherein the DC voltage source (1) comprises a high voltage battery.

6. Motor vehicle with a drive apparatus according to one of the preceding claims.

7. Method for operating a drive apparatus for a motor vehicle, which comprises a DC voltage source (1), which has a negative terminal (2) and a positive terminal (3), a three-phase motor (4), the windings of which are combined in a neutral point (8), and an inverter (9), which is connected to the DC voltage source (1) and the three-phase motor (4), in order to convert a direct current into a three-phase current, wherein the neutral point (8) of the three-phase motor (4) is short-circuited with the negative terminal (2) or positive terminal (3) of the DC voltage source (1), when a predefined fault in the drive apparatus is present, wherein the predefined fault is automatically detected by means of a monitoring facility, wherein the monitoring facility controls the switch element (10),
**characterised in that**
the predefined fault is a failure of a circuit part of the inverter (9) in the field weakening range, in which power transistors of the inverter (9) are switched off, and a torque of the three-phase motor (4) is monitored using the monitoring facility, wherein the predefined fault is given at a predetermined deviation of the torque from a setpoint torque, namely when the torque of the three-phase motor (4) exceeds a predefined braking torque.

## Revendications

1. Dispositif (1) de propulsion d'un véhicule automobile comprenant
- une source (1) de tension continue, qui a une borne (2) moins et une borne (3) plus,
- un moteur (4) à courant triphasé, dont les enroulements concourent en un point (8) étoile,
- un convertisseur (9) raccordé à la source de tension continue et au moteur à courant triphasé, pour transformer un courant continu en un courant triphasé,
- dans lequel le point (8) étoile du moteur (4) à courant triphasé est raccordé à un élément (10) de commutation sur la borne (2) moins ou la borne (3) plus de la source (1) de courant continu, de manière à pouvoir mettre le point étoile, dans un cas de perturbation donné à l'avance du dispositif d'entraînement, au potentiel de l'une des bornes,
- un dispositif de contrôle pour constater automatiquement le cas de perturbation donné à l'avance, le dispositif de contrôle commandant l'élément (10) de commutation,
**caractérisé en ce que**
le cas de perturbation donné à l'avance est une défaillance d'une partie de ligne du convertisseur (9), dans la zone d'affaiblissement de champ, dans laquelle des transistors de puissance du convertisseur (9) sont bloqués et, par le dispositif de contrôle, un couple du moteur (4) à courant triphasé peut être contrôlé et dans lequel, il y a un cas de perturbation donné à l'avance, s'il se produit un écart défini à l'avance du couple à un couple de consigne et cela, si le couple du moteur (4) à courant triphasé dépasse un couple de freinage donné à l'avance.

2. Dispositif de propulsion suivant la revendication 1, dans lequel l'élément (10) de commutation est un thyristor.

3. Dispositif de propulsion suivant la revendication 1, dans lequel l'élément (10) de commutation est un transistor ou un contacteur.

4. Dispositif de propulsion suivant la revendication 1, dans lequel, par le dispositif de contrôle, une tension à l'une ou à plusieurs des bornes du moteur (4) à courant triphasé peut être contrôlée et dans lequel le cas de perturbation donné à l'avance est donné s'il se produit un écart défini à l'avance de la tension à une tension de consigne.

5. Dispositif de propulsion suivant l'une des revendications précédentes, dans lequel la source (1) de tension continue comprend une batterie de haute tension.

6. Véhicule ferroviaire ayant un dispositif de propulsion suivant l'une des revendications précédentes.

7. Procédé pour faire fonctionner un dispositif de propulsion d'un véhicule automobile, qui comprend une source (1) de tension continue ayant une borne (2) moins et une borne (3) plus, un moteur (4) à courant triphasé, dont les enroulements concourent en un point (8) étoile et un convertisseur (9) raccordé à la source (1) de tension continue et au moteur (4) à courant triphasé, pour transformer un courant continu en un courant triphasé, dans lequel on court-circuite le point (8) étoile du moteur (4) à courant triphasé par la borne (2) moins ou la borne (3) plus de la source (1) de tension continue, s'il se produit un cas de perturbation donné à l'avance du dispositif de propulsion, dans lequel on constate automatiquement le cas de perturbation donné à l'avance au moyen d'un dispositif de contrôle, le dispositif de contrôle commandant l'élément (10) de commutation,
**caractérisé en ce que**
le cas de perturbation donné à l'avance est une défaillance d'une partie de ligne du convertisseur (9), dans la zone d'affaiblissement de champ, dans laquelle des transistors de puissance du convertisseur (9) sont bloqués et par le dispositif de contrôle, un couple du moteur (4) à courant triphasé peut être contrôlé et dans lequel, il y a un cas de perturbation donné à l'avance, s'il se produit un écart défini à l'avance du couple à un couple de consigne et cela, si le couple du moteur (4) à courant triphasé dépasse un couple de freinage donné à l'avance.
